# EUROPEAN PATENT APPLICATION

(11) **EP 2 048 455 A2**
(43) Date of publication of application: **15.04.2009**
(21) Application number: 08380284.3
(22) Date of filing: 07.10.2008
(51) Int. Cl.: F24J 2/46

(54) **Automatic solar panel cleaning system**

(30) Priority: 09.10.2007 ES 200702658
(71) Applicant: Brown Group Spain, S.A., Cervello´ (Barcelona) 08758 (ES)
(72) Inventor: Castellano Diaz, Juan Jose, 08758 Cervello´ (Barcelona) (ES)
(74) Representative: Espiell Volart, Eduardo Maria

(57) **Abstract**

This system comprises: - longitudinal rails (1), - cleaning brushes (3), - a drive unit (2) mounted with possibility of linear displacement along the longitudinal rails (1) and provided with at least one motor element (4) for the rotational actuation of the cleaning brushes (3) and the movement of said cleaning brushes (3), together with the drive unit (2), along the longitudinal rails (1), - an electric control panel (5) and - a rain sensor (6) for the automatic start-up of the drive unit (2).

## Description

### Object of the invention

The present invention relates to an automatic solar panel cleaning system.

### Background of the invention

Currently, the use of solar panels for the collection of solar energy is a common practice. Obviously, these solar panels are installed outdoors in order to achieve a direct impact from the solar light, and when dealing with facilities of a certain scope, in the countryside or rural areas.

Given that solar panels are kept at a slope, which can be variable or fixed, dust and particles in suspension are left on the surface of the panel, forming a layer or film which makes the impact of the solar rays on the surface of the solar panel difficult and consequently considerably reduces its performance.

In order to achieve an optimal performance of the solar panel it is necessary to clean it periodically and eliminate the dirt accumulated thereupon. This operation is currently carried out manually, which poses several drawbacks, such as: high maintenance personnel costs, risk of accidents of the operators who have to use ladders or other lifting means to access the surface of the panel and the drawback of transporting tools and water or other cleaning products to the area where the panels are located.

### Description of the invention

In order to solve the previously mentioned problems, the automatic solar panel cleaning system object of the invention has been invented, which features constructive special features aimed at permitting its assembly on the support structure, fixed or mobile, of the solar panel and to carry out the cleaning of the solar panel automatically and without the intervention of operators, using rain water for said purpose. This system provides advantages of use; whereamongst should be mentioned a considerable reduction in the cleaning costs of the solar panels and the maintenance of the clean panels, which optimizes its performance.

In order to do that, and in accordance with the invention, this system comprises: longitudinal rails intended to be fastened exteriorly on opposite sides of the support structure, so that said rails are disposed on a plane parallel to the solar panel, - cleaning brushes positioned transversally with respect to the longitudinal rails and mounted with possibility of rotation with respect to a drive unit, - a drive unit mounted with possibility of linear displacement along the longitudinal rails and provided with at least one motor element for the rotational actuation of the brushes and the movement of said cleaning brushes, together with the drive unit, along the longitudinal rails, - an electric control panel and - a rain sensor that sends a signal to the electric control panel and causes the start-up of the drive unit when it receives rain water.

The longitudinal rails are fastened by means of supports suitable in each case to the support structure of the panel, said longitudinal rails defining the alternative movement direction of the drive unit and the cleaning brushes.

In accordance with the invention, the cleaning brushes form at least one alignment which covers the existing distance between the two longitudinal rails, or what is the same, the total width of the solar panel, so that when the brushes move along the rails due to the action of the drive unit, said brushes will clean the entire surface of the panel in a single passing.

According to the invention, the drive unit is connected to at least one of the longitudinal rails by means of a linear displacement transmission mechanism.

This transmission mechanism is in charge of causing the linear or longitudinal displacement of the drive unit and the cleaning brushes along the rails when said drive unit enters into operation. Said linear displacement transmission mechanism can be a rack and pinion mechanism or of any other type, since that does not change the essence of the invention.

Nevertheless, depending on the average rainfall in the installation area of the solar panels, the electronic control panel also permits the programming of additional cleanings during summertime or long periods of drought, so that the brushes make a dry sweep of the dust gathered on the solar panel, improving the performance of the panels.

In inoperative position, the cleaning brushes and the drive unit will be disposed at one of the ends of the longitudinal rails so that they do not interfere in the impact of the solar rays on the panel. When the system enters into operation the cleaning rollers begin rotating and advancing due to the action of the drive unit along the longitudinal rails, said rollers actuating on the entirety of the surface of the panel. During the work cycle, said cleaning rollers can perform one of more paths along the rails, depending on the parameters of the work cycle introduced previously in the electric control panel, finally remaining positioned at one of the ends of the rails.

In the event that the system has been activated by the rain sensor, after performing the cleaning cycle, the system will remain inactive for a pre-established time, preventing the rain sensor from activating it again during said period of time.

### Description of the drawings

In order to complement the description being carried out and with the aim of helping towards the understanding of the characteristics of the invention, the present specification is accompanied with a set of drawings wherein the following, in an illustrative and non-limitative manner, has been represented:

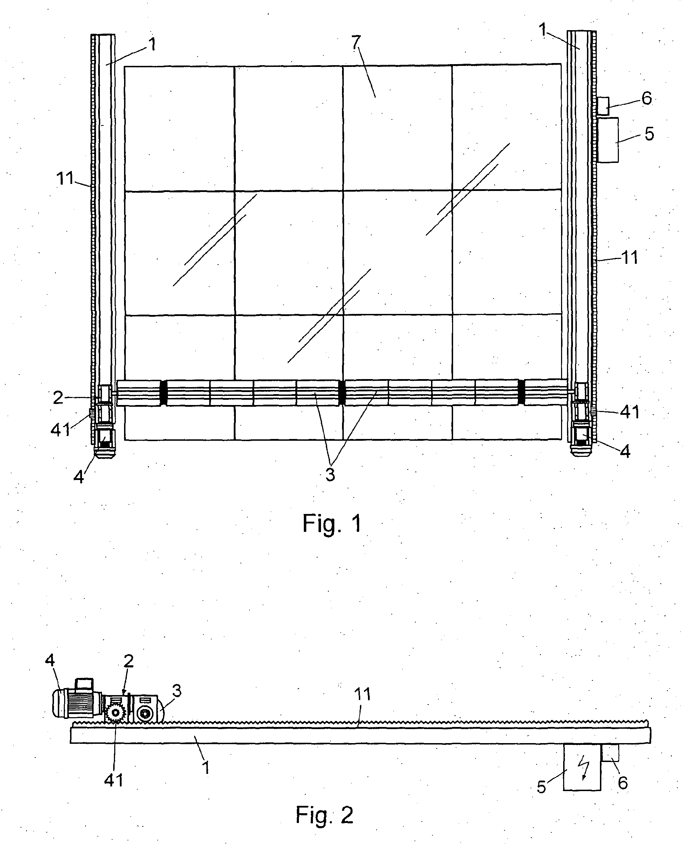

- Figure 1: shows an upper plan view of an example of embodiment of the automatic solar panel cleaning system.
- Figure 2: shows a profile view of the cleaning system of the previous figure.

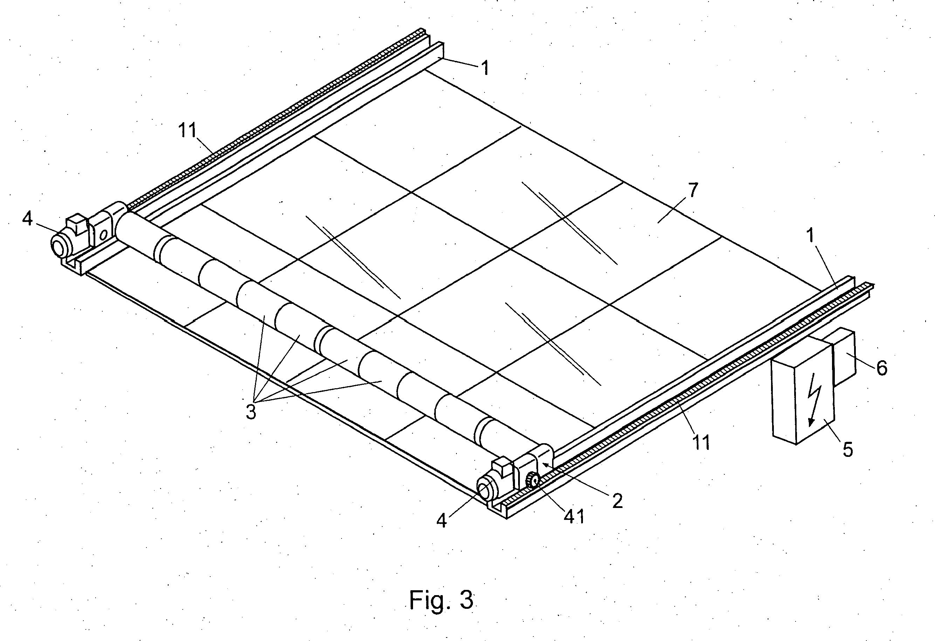

- Figure 3: shows a perspective view of the solar panel cleaning system of the previous figures.

### Preferred embodiment of the invention

In the example of embodiment shown in the figures, the automatic solar panel cleaning system comprises longitudinal rails (1) whereupon is mounted a drive unit (2) with possibility of alternative linear displacement.

Said drive unit (2) is bearer of cleaning brushes (3), appreciably cylindrical which form an alignment positioned transversally with respect to the longitudinal rails (1), covering the existing space between said rails.

In the example shown, the drive unit (2) comprises two motors (2) which, when activated simultaneously cause the rotation of the cleaning brushes (3) and the linear displacement of the assembly formed by the cleaning brushes (3) and the drive unit (2) along the longitudinal rails (1).

The motors (4) of the drive unit are connected to the longitudinal rails (1) by means of transmission mechanisms for the linear displacement of the drive unit (2) along the rails. In this example of embodiment the transmission mechanisms are composed of two pinions (41) actuated by the motors (4) and respective racks (11) fastened to the longitudinal rails (1).

The simultaneous actuation of the motors (4) guarantees a linear displacement of the drive unit (2) and the cleaning brushes (3) in a perfectly parallel direction to the longitudinal rails, which facilitates the guided movement of the drive unit on said longitudinal rails (1).

The system additionally comprises an electric control panel (5) for the activation and de-activation of the drive unit (2) and a rain sensor (6) connected to the aforementioned electric control panel (5).

When the rain detector (6) receives rain water it sends a signal to the electric control panel (5), automatically causing the start-up of the drive unit (2) and consequently the advancement of the drive unit (2) along the longitudinal rails (1) and the rotation of the cleaning brushes (3) which use the rain water to carry out the cleaning of that solar panel (7) whereon the cleaning system is installed.

The assembly of the system is carried out by fastening the longitudinal rails (1) by means of suitable supports to the support structure of the solar panel (7) in question, so that the cleaning brushes (3) are parallel to the solar panel (7) and make contact during the operation of the system on the upper surface of said solar panel (7), performing the cleaning thereof.

The nature of the invention having been sufficiently described, as well as a preferred example of embodiment, it should be mentioned for the appropriate purposes that the materials, shape, size and arrangement of the elements described can be modified, as long as that does not mean an alteration of the essential characteristics of the invention, which is claimed below.

## Claims

1. Automatic solar panel cleaning system; **characterized in that** it comprises: - longitudinal rails (1) intended to be fastened exteriorly on opposite sides of the support structure of the solar panel (7), on a plane parallel to said solar panel (7), - cleaning brushes (3) positioned transversally with respect to the longitudinal rails (1) and mounted with possibility of rotation with respect to a drive unit (2), - a drive unit (2) mounted with possibility of linear displacement along the longitudinal rails (1) and provided with at least one motor element (1) for the rotational actuation of the cleaning brushes (3) and the movement of said cleaning brushes (3), together with the drive unit (2), along the longitudinal rails (1), - an electric control panel (5) and - a rain sensor (6) that sends a signal to the electric control panel (5) and causes the start-up of the drive unit (2) when it receives rain water.

2. System, according to claim 1, **characterized in that** the cleaning brushes (3) form at least one alignment which covers the distance existing between the two longitudinal rails (1).

3. System, according to previous claims, **characterized in that** the drive unit (2) is connected to at least one of the longitudinal rails by means of a transmission mechanism which causes the linear displacement of the drive unit (2) along the longitudinal rails (1) when said drive unit (2) is activated.

4. System, according to claim 3, **characterized in that** the transmission mechanism comprises at least one pinion (41) actuated by a motor (4) and a rack (11) fastened to one of the longitudinal guides (1).
